(19) Europäisches Patentamt
European Patent Office
Office européen des brevets

(11) **EP 3 075 053 B1**

(12) **EUROPÄISCHE PATENTSCHRIFT**

(45) Veröffentlichungstag und Bekanntmachung des Hinweises auf die Patenterteilung:
**03.07.2019 Patentblatt 2019/27**

(51) Int Cl.:
*H02J 3/18* *(2006.01)*     *H02J 3/12* *(2006.01)*
*H02J 3/00* *(2006.01)*

(21) Anmeldenummer: **14752582.8**

(22) Anmeldetag: **05.08.2014**

(86) Internationale Anmeldenummer:
**PCT/EP2014/066812**

(87) Internationale Veröffentlichungsnummer:
**WO 2015/078598 (04.06.2015 Gazette 2015/22)**

(54) **VERFAHREN ZUR RECHNERGESTÜTZTEN KONFIGURATION EINES ELEKTRISCHEN STROMNETZES**

METHOD FOR COMPUTER-ASSISTED CONFIGURATION OF AN ELECTRICAL POWER GRID

PROCÉDÉ DE CONFIGURATION ASSISTÉE PAR ORDINATEUR D'UN RÉSEAU ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.11.2013 DE 102013224156**
**28.11.2013 DE 102013224411**

(43) Veröffentlichungstag der Anmeldung:
**05.10.2016 Patentblatt 2016/40**

(73) Patentinhaber: **Siemens Aktiengesellschaft**
**80333 München (DE)**

(72) Erfinder:
• **BAMBERGER, Joachim**
**80999 München (DE)**
• **MÜNZ, Ulrich**
**81673 München (DE)**

(56) Entgegenhaltungen:
**EP-A1- 2 521 237     WO-A2-2012/037989**
**US-A1- 2012 249 278**

**Beschreibung**

Die Erfindung betrifft ein Verfahren zur rechnergestützten Konfiguration eines elektrischen Stromnetzes sowie eine entsprechende Vorrichtung und ein elektrisches Stromnetz.

Elektrische Stromnetze umfassen eine Mehrzahl von über Stromleitungen verbundene Netzknoten, in denen elektrische Energie erzeugt wird bzw. elektrische Energien entnommen wird. Die Netzknoten werden dabei oftmals im Rahmen einer Proportionalregelung gesteuert, bei der für die einzelnen Knoten deren Spannung und Frequenz bzw. deren eingespeiste Wirkleistung und Blindleistung eingestellt werden. Man unterscheidet zwischen netzbildenden Erzeugerknoten und netzstützenden Erzeugerknoten. In einem netzbildenden Erzeugerknoten, der auch als spannungsgeregelter Erzeugerknoten bezeichnet wird, wird im Rahmen der Proportionalregelung die Amplitude und Frequenz der Spannung in diesem Knoten eingestellt. Demgegenüber wird in einem netzstützenden Erzeugerknoten, der auch als stromgeregelter Erzeugerknoten bezeichnet wird, im Rahmen der Proportionalregelung die eingespeiste Wirkleistung und Blindleistung geregelt.

In heutigen Stromnetzen sind netzstützende Erzeugerknoten oftmals regenerative Energieerzeugungsanlagen, welche Leistungselektronik, wie z.B. Inverter, beinhalten, die nur für einen bestimmten Maximalstrom ausgelegt sind. Bei zu großen Schwankungen der Last im Stromnetz kann aufgrund einer Strombegrenzung der netzstützenden Erzeugerknoten das Stromnetz instabil werden, was unter Umständen zu Ausfällen des Stromnetzes führen kann. Demzufolge ist der Betrieb der netzstützenden Erzeugerknoten in der Regel derart ausgelegt, dass bei Lastsprüngen der Maximalstrom nicht erreicht wird. Dies hat jedoch zur Folge, dass der Energieanteil im Stromnetz, der über regenerative Energieerzeugung bereitgestellt wird, begrenzt ist. Hierdurch steigen die Kosten der Stromerzeugung, da hierfür vermehrt netzbildende Erzeugerknoten eingesetzt werden, die in der Regel konventionelle Generatoren, wie z.B. Dieselgeneratoren oder Gasturbinen, sind.

Aus dem Stand der Technik sind nur wenige Ansätze bekannt, wie in einem Stromnetz der Anteil der regenerativen Energieerzeugung erhöht werden kann. In dem Dokument [1] werden Stromnetze in der Form von sog. Micro Grids mit einem hohen Anteil regenerativer Energieerzeugung beschrieben. Jedoch werden in solchen Netzen große und überdimensionierte elektrische Energiespeicher als netzbildende Knoten eingesetzt. Zur Optimierung von Stromnetzen sind ferner Simulationsverfahren bekannt, mit denen unterschiedliche Laständerungen in dem Netz simuliert werden. Diese Verfahren sind jedoch rechenaufwändig und können in der Regel nur für eine kleine Anzahl von möglichen Laständerungen Ergebnisse liefern.

Dokument WO 2012/037989 A2 offenbart ein Verfahren zur rechnergestützten Regelung der elektrischen Energieverteilung in einem dezentralen Energienetz, bei dem basierend auf Messwerten in dem Energienetz mittels einer Optimierung Stellgrößen des Energienetzes eingestellt werden. Die Optimierung erfolgt im Hinblick auf eine möglichst geringe Abweichung der von Netzknoten generierten Wirkleistungen von Sollwirkleistungen.

Aufgabe der Erfindung ist es, ein elektrisches Stromnetz einfach und schnell mit einem rechnergestützten Verfahren geeignet zu konfigurieren.

Diese Aufgabe wird durch die unabhängigen Ansprüche gelöst. Weiterbildungen der Erfindung sind in den abhängigen Ansprüchen definiert.

Das erfindungsgemäße Verfahren dient zur rechnergestützten Konfiguration eines elektrischen Stromnetzes. Das Verfahren kann dabei vorab (off-line) vor Inbetriebnahme des Stromnetzes durchgeführt werden. Ebenso kann das Verfahren während des Betriebs des Stromnetzes (on-line) durchgeführt bzw. wiederholt werden. Das mit dem Verfahren konfigurierte elektrische Stromnetz umfasst eine Mehrzahl von über Stromleitungen verbundenen Netzknoten. Diese Netzknoten beinhalten einen oder mehrere erste Netzknoten. Der oder die ersten Netzknoten stellen im Betrieb des Stromnetzes Wirkleistung für eine Last (z.B. eine passive Last) im Stromnetz bereit und sind somit entsprechende Erzeugerknoten. Die Last kann in dem Stromnetz je nach Ausführungsform an einem Punkt oder an mehreren Punkten bzw. Knoten auftreten.

Ein jeweiliger erster Netzknoten stellt in dem Stromnetz einen netzbildenden Erzeugerknoten dar, in dem mittels eines Regelverfahrens und insbesondere mittels einer Proportionalregelung die Amplitude und Frequenz der Spannung in diesem Netzknoten einerseits in Abhängigkeit von der durch diesen Netzknoten eingespeisten Blindleistung oder dem durch diesen Netzknoten eingespeisten Blindstrom und andererseits in Abhängigkeit von der durch diesen Netzknoten eingespeisten Wirkleistung oder dem durch diesen Netzknoten eingespeisten Wirkstrom geregelt werden. Eine solches Regelverfahren bzw. eine solche Proportionalregelung ist an sich bekannt. Im Rahmen der Proportionalregelung ist die Amplitude der Spannung proportional zur Blindleistung bzw. zum Blindstrom und die Frequenz der Spannung ist proportional zur Wirkleistung bzw. zum Wirkstrom.

In dem erfindungsgemäßen Verfahren werden Wirkleistungsveränderungen der ersten Netzknoten für jeweilige vorgegebene Wirkleistungsveränderungen der Last basierend auf einem dynamischen Modell des Stromnetzes (d.h. einem Modell, das die zeitliche Veränderung von relevanten Größen im Stromnetz, wie Spannungen, Leistungen und Frequenzen, beschreibt) ermittelt. Mit anderen Worten werden die Wirkleistungsveränderungen der ersten Knoten über ein dynamisches Modell des Stromnetzes in Abhängigkeit von vorgegebenen Wirkleistungsveränderungen der Last beschrieben bzw. modelliert und können somit rechnergestützt berechnet werden. Als dynamisches Modell des Stromnetzes kann z.B. das in der Druckschrift [2] beschriebene Modell verwendet werden. In einer bevorzugten Variante wird ein Modell eingesetzt, welches auf der Annahme beruht, dass die in einem Netzknoten erzeugte Wirkleistung und Blindleistung unmittelbar in jedem anderen Netzknoten bereitstehen. Dieses Modell wird in der detaillierten Beschreibung näher erläutert. Die soeben beschriebene Annahme ist dabei äquivalent zu der Annahme von kurzen (vernachlässigbaren) Stromleitungen zwischen den Netzknoten. In einer weiteren bevorzugten Variante wird ein Modell eingesetzt, welches ein linearisiertes Lastflussmodell verwendet.

In dem erfindungsgemäßen Verfahren werden die Regelverfahren der jeweiligen ersten Netzknoten derart eingestellt, dass mittels der über das obige Modell ermittelten Wirkleistungsveränderungen der ersten Netzknoten ein Optimierungsproblem mit dem Ziel eines in Bezug auf ein oder mehrere Optimierungskriterien optimalen Betriebs des Stromnetzes gelöst wird. Je nach Ausgestaltung können diese Optimierungskriterien bzw. das Ziel unterschiedlich festgelegt werden. Zum Beispiel können die Optimierungskriterien derart festgelegt sein, dass sich hierdurch geringe Betriebskosten für das Stromnetz ergeben. Erfindungsgemäß ist es das Ziel des Optimierungsproblems, dass möglichst wenig der für die Last bereitgestellten Wirkleistung von dem oder den ersten Netzknoten stammt. Dies entspricht somit dem Optimierungskriterium der Bereitstellung von möglichst wenig Wirkleistung durch den oder die ersten Netzknoten.

In einer bevorzugten Ausführungsform des erfindungsgemäßen Verfahrens umfassen die Netzknoten ferner einen oder mehrere zweite Netzknoten, welche im Betrieb des Stromnetzes Wirkleistung für die Last im Stromnetz bereitstellen, wobei ein jeweiliger zweiter Netzknoten ein netzstützender Erzeugerknoten in der Form einer regenerativen Energieerzeugungsanlage ist, in dem mittels eines Regelverfahrens und insbesondere mittels einer Proportionalregelung einerseits die durch diesen Netzknoten eingespeiste Wirkleistung oder der durch diesen Netzknoten eingespeiste Wirkstrom und andererseits die durch diesen Netzknoten eingespeiste Blindleistung oder der durch diesen Netzknoten eingespeiste Blindstrom in Abhängigkeit von der Frequenz und Amplitude der Spannung in diesem Netzknoten geregelt werden. Eine solches Regelverfahren bzw. eine solche Proportionalregelung ist ebenfalls an sich bekannt. Bei der Proportionalregelung ist dabei die eingespeiste Wirkleistung bzw. der eingespeiste Wirkstrom proportional zur Frequenz der Spannung, und die eingespeiste Blindleistung bzw. der eingespeiste Blindstrom ist proportional zur Amplitude der Spannung. Im Rahmen dieser Ausführungsform werden ferner Wirkleistungsveränderungen der zweiten Netzknoten für jeweilige vorgegebene Wirkleistungsveränderungen der Last basierend auf dem dynamischen Modell des Stromnetzes ermittelt. Darüber hinaus werden die Regelverfahren der jeweiligen ersten und zweiten Netzknoten derart eingestellt werden, dass mittels der ermittelten Wirkleistungsveränderungen der ersten und zweiten Netzknoten das Optimierungsproblem mit dem Ziel eines in Bezug auf ein oder mehrere Optimierungskriterien optimalen Betriebs des Stromnetzes gelöst wird.

Das erfindungsgemäße Verfahren beruht auf der Erkenntnis, dass auf einfache Weise mit einem geeigneten dynamischen Modell des Stromnetzes die Regelverfahren der Erzeugerknoten derart parametriert werden können, dass vorgegebene Optimierungskriterien bezüglich des Betriebs des Stromnetzes erfüllt sind. In einer bevorzugten Variante wird dabei im optimalen Betrieb möglichst viel Energie im Stromnetz durch regenerative Energieerzeugungsanlagen generiert, wodurch die Kosten der Stromerzeugung gering gehalten werden. Das Verfahren wird insbesondere in einem Stromnetz in der Form eines Inselnetzes eingesetzt, in dem die Netzknoten nicht an weitere Stromnetze angebunden sind.

In einer bevorzugten Variante des erfindungsgemäßen Verfahrens ist das Regelverfahren in dem netzbildenden Erzeugerknoten eine Proportionalregelung, die eine erste und eine zweite Proportionalregelung umfasst.

Vorzugsweise wird gemäß der ersten Proportionalregelung basierend auf einem ersten Proportionalitätsfaktor und einer dem netzbildenden Erzeugerknoten zugeordneten Referenzwirkleistung sowie einer dem Stromnetz zugeordneten Referenzfrequenz die Frequenz der Spannung in dem netzbildenden Erzeugerknoten in Abhängigkeit von der durch den netzbildenden Erzeugerknoten eingespeisten Wirkleistung festgelegt. In einer alternativen Variante wird gemäß der ersten Proportionalregelung basierend auf einem ersten Proportionalitätsfaktor und einem dem netzbildenden Erzeugerknoten zugeordneten Referenzwirkstrom sowie einer dem Stromnetz zugeordneten Referenzfrequenz die Frequenz der Spannung in dem netzbildenden Erzeugerknoten in Abhängigkeit von dem durch den netzbildenden Erzeugerknoten eingespeisten Wirkstrom festgelegt.

Vorzugsweise wird gemäß der zweiten Proportionalregelung basierend auf einem zweiten Proportionalitätsfaktor und einer dem netzbildenden Erzeugerknoten zugeordneten Referenzblindleistung sowie einer dem netzbildenden Erzeugerknoten zugeordneten Referenzspannung die Amplitude der Spannung in dem netzbildenden Erzeugerknoten in Abhängigkeit von der durch den netzbildenden Erzeugerknoten eingespeisten Blindleistung festgelegt. In einer alternativen Variante wird gemäß der zweiten Proportionalregelung basierend auf einem zweiten Proportionalitätsfaktor und einem dem netzbildenden Erzeugerknoten zugeordneten Referenzblindstrom sowie einer dem netzbildenden Erzeugerknoten zugeordneten Referenzspannung die Amplitude der Spannung in dem netzbildenden Erzeugerknoten in Abhängigkeit von dem durch den netzbildenden Erzeugerknoten eingespeisten Blindstrom festgelegt.

In einer weiteren Ausführungsform ist das Regelverfahren in dem netzstützenden Erzeugerknoten eine Proportionalregelung, die eine dritte und eine vierte Proportionalregelung umfasst. Vorzugsweise wird gemäß der dritten Proportionalregelung basierend auf einem dritten Proportionalitätsfaktor und einer dem netzstützenden Erzeugerknoten zugeordneten Referenzwirkleistung sowie einer dem Stromnetz zugeordnete Referenzfrequenz die durch den netzstützenden Erzeugerknoten eingespeiste Wirkleistung in Abhängigkeit von der Frequenz der Spannung in dem netzstützenden Erzeugerknoten festgelegt. In einer alternativen Variante wird gemäß der dritten Proportionalregelung basierend auf einem dritten Proportionalitätsfaktor und einem dem netzstützenden Erzeugerknoten zugeordneten Referenzwirkstrom sowie einer dem Stromnetz zugeordnete Referenzfrequenz der durch den netzstützenden Erzeugerknoten eingespeiste Wirkstrom in Abhängigkeit von der Frequenz der Spannung in dem netzstützenden Erzeugerknoten festgelegt.

Vorzugsweise wird gemäß der vierten Proportionalregelung basierend auf einem vierten Proportionalitätsfaktor und einer dem netzstützenden Erzeugerknoten zugeordneten Referenzblindleistung sowie einer dem netzstützenden Erzeugerknoten zugeordneten Referenzspannung die durch den netzstützenden Erzeugerknoten eingespeiste Blindleistung in Abhängigkeit von der Amplitude der Spannung in dem netzstützenden Erzeugerknoten festgelegt. In einer alternativen Variante wird gemäß der vierten Proportionalregelung basierend auf einem vierten Proportionalitätsfaktor und einem dem netzstützenden Erzeugerknoten zugeordneten Referenzblindstrom sowie einer dem netzstützenden Erzeugerknoten zugeordneten Referenzspannung der durch den netzstützenden Erzeugerknoten eingespeiste Blindstrom in Abhängigkeit von der Amplitude der Spannung in dem netzstützenden Erzeugerknoten festgelegt.

In einer besonders bevorzugten Ausführungsform werden im Rahmen der Einstellung der ersten und zweiten Proportionalregelung und/oder der dritten und vierten Proportionalregelung der erste und/oder der zweite Proportionalitätsfaktor und/oder der dritte und/oder der vierte Proportionalitätsfaktor und/oder die Referenzwirkleistung oder der Referenzwirkstrom und/oder die Referenzblindleistung oder der Referenzblindstrom in den jeweiligen ersten und/oder zweiten Netzknoten bestimmt. Diese Größen werden somit zur Einstellung bzw. Parametrierung der Proportionalregelung in den netzbildenden bzw. netzstützenden Netzknoten genutzt.

Das oben definierte und allgemein formulierte Optimierungsproblem stellt in einer Variante der Erfindung eine Minimierung der durch den oder die ersten Netzknoten bereitgestellten Wirkleistung unter der Nebenbedingung dar, dass die Wirkleistungsveränderungen der ersten und/oder zweiten Netzknoten (und insbesondere nur der zweiten Netzknoten) für die jeweiligen vorgegebenen Wirkleistungsveränderungen der Last begrenzt sind, d.h. einen vorgegebenen Schwellenwert nicht überschreiten.

In einer weiteren Variante ist das Optimierungsproblem gegeben durch eine Minimierung der Wirkleistungsveränderungen der ersten und/oder zweiten Netzknoten für die jeweiligen vorgegebenen Wirkleistungsveränderungen der Last. Vorzugsweise fließt dabei nur die Minimierung der Wirkleistungsveränderungen der zweiten Netzknoten in das Optimierungsproblem ein. Hierdurch wird die Größe von Überschwingern in die netzstützenden Netzknoten begrenzt, so dass diese Netzknoten bei einer höheren Wirkleistung betrieben werden können. Somit wird mehr Wirkleistung durch die netzstützenden Erzeugerknoten bereitgestellt, so dass das eingangs definierte Optimierungsziel erfüllt ist, wonach möglichst wenig der für die Last bereitgestellten Wirkleistung von den ersten Netzknoten stammt.

In einer weiteren Variante des erfindungsgemäßen Verfahrens wird als Nebenbedingung des Optimierungsproblems berücksichtigt, dass die Abweichungen der Frequenzen der Spannungen in dem oder den netzbildenden und/oder netzstützenden Erzeugerknoten (insbesondere nur in den netzbildenden Erzeugerknoten) von einer dem Stromnetz zugeordneten Referenzfrequenz für die jeweiligen vorgegebenen Wirkleistungsveränderungen der Last begrenzt sind und/oder die Abweichungen der Amplituden der Spannungen in dem oder den netzbildenden und/oder netzstützenden Erzeugerknoten (insbesondere nur in den netzbildenden Erzeugerknoten) von einer dem jeweiligen netzbildenden und/oder netzstützenden Erzeugerknoten zugeordneten Referenzspannung für jeweilige vorgegebene Blindleistungsveränderungen der Last begrenzt sind. Mit dieser Ausführungsform der Erfindung wird ein stabiler Netzbetrieb mit weitgehend konstanter Spannungsamplitude und Spannungsfrequenz in den Netzknoten sichergestellt.

In einer weiteren Variante des erfindungsgemäßen Verfahrens wird zur Ermittlung der Wirkleistungsveränderungen der zweiten Netzknoten eine zeitliche Veränderung der Frequenz und der Amplitude der Spannung in den jeweiligen zweiten Netzknoten über einen PLL-Algorithmus (PLL = Phase-locked Loop) abgeschätzt.

In einer bevorzugten Ausführungsform umfassen der oder die ersten Netzknoten in dem mit dem erfindungsgemäßen Verfahren konfigurierten Stromnetz einen oder mehrere elektrische Energiespeicher, insbesondere Batterien, und/oder einen oder mehrere über fossilen oder regenerativ erzeugten Brennstoff angetriebene elektrische Generatoren, wie z.B. Dieselgeneratoren. Die zweiten Netzknoten stellen in einer bevorzugten Variante eine oder mehrere Photovoltaikanlangen und/oder Windkraftanlagen dar.

Neben dem oben beschriebenen Verfahren betrifft die Erfindung eine Vorrichtung zur rechnergestützten Konfiguration eines elektrischen Stromnetzes, wobei die Vorrichtung zur Durchführung des erfindungsgemäßen Verfahrens bzw. einer oder mehrerer bevorzugter Varianten des erfindungsgemäßen Verfahrens eingerichtet ist.

Darüber hinaus betrifft die Erfindung ein elektrisches Stromnetz, welches die oben beschriebene erfindungsgemäße Vorrichtung umfasst.

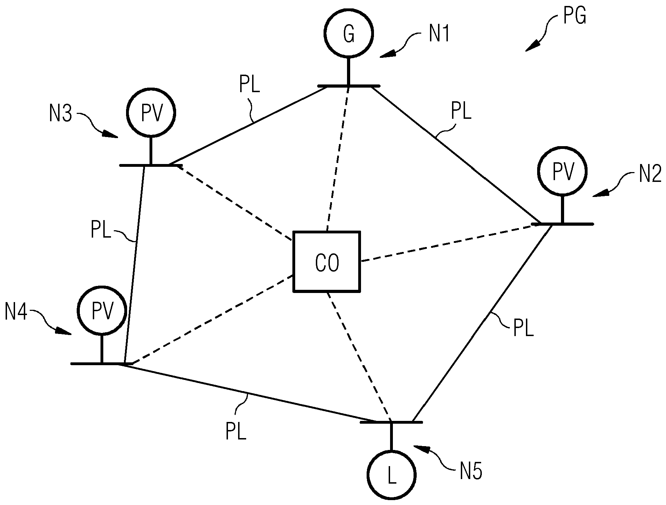

Ein Ausführungsbeispiel der Erfindung wird nachfolgend anhand der beigefügten Fig. 1 detailliert beschrieben. Diese Figur zeigt ein Stromnetz in der Form eines Inselnetzes, in dem eine Ausführungsform des erfindungsgemäßen Verfahrens durchgeführt wird.

Das in Fig. 1 gezeigte Stromnetz PG umfasst die Netzknoten N1, N2, N3, N4 und N5, die über Stromleitungen PL miteinander verbunden sind. Die Netzknoten N1 bis N4 sind dabei Erzeugerknoten, wobei der Netzknoten N1 ein Generatorknoten G in der Form eines Dieselgenerators ist und wobei die Netzknoten N2, N3 und N4 regenerative Energieerzeugungsanlagen in der Form von Photovoltaikanlagen PV sind. Der Generatorknoten N1 stellt einen netzbildenden Erzeugerknoten (auch als spannungsgeregelter Erzeugerknoten bezeichnet) dar, wohingegen die regenerativen Energieerzeugungsanlagen N2 bis N4 netzstützenden Erzeugerknoten (auch als stromgeregelte Erzeugerknoten bezeichnet) sind. Diese beiden Arten von Netzknoten unterscheiden sich in ihrer Proportionalregelung, wie weiter unten näher beschrieben wird.

Die Erzeugerknoten N1 bis N4 stellen Wirkleistung für die im Netz vorhandene passive Last L dar, die in dem Ausführungsbeispiel der Fig. 1 durch einen Lastknoten N5 repräsentiert wird. Alternativ kann die Last jedoch auch an verschiedenen Stellen bzw. an einer Mehrzahl von Knoten in dem Stromnetz auftreten. Zur geeigneten Konfiguration bzw. Steuerung des Stromnetzes ist eine zentrale Steuereinheit CO vorgesehen, die mit den einzelnen Knoten kommuniziert, wie durch gestrichelte Linien angedeutet ist. In dieser Steuereinheit wird eine Ausführungsform des erfindungsgemäßen Verfahrens durchgeführt. Insbesondere werden entsprechende Parameter der in den Knoten implementierten Proportionalregler geeignet eingestellt.

Gemäß der hier beschriebenen Variante des erfindungsgemäßen Verfahrens wird rechnergestützt bei Inbetriebnahme des Stromnetzes oder bei Bedarf auch während des Betriebs ein Optimierungsproblem gelöst, um Parameter der Proportionalregler so festzulegen, dass bei schnellen Änderungen der Wirk- und Blindleistung der Last die hierdurch verursachte Veränderung der Wirk- und Blindleistungen der regenerativen Erzeugerknoten begrenzt ist und dabei möglichst wenig der für die Last bereitgestellten Wirkleistung von dem Generatorknoten G bereitgestellt wird. Die Optimierung wird basierend auf einem Modell des Stromnetzes durchgeführt, welches auf der Annahme von kurzen Stromleitungen zwischen den Netzknoten beruht. Dieses Modell und die entsprechende Optimierung werden im Folgenden näher erläutert. Ggf. kann anstatt des nachfolgend beschriebenen Modells auch ein anderes Modell des Stromnetzes zur Formulierung des Optimierungsproblems eingesetzt werden, wie z.B. das in der Druckschrift [2] beschriebene Modell.

Wie bereits erwähnt, beruht das hier verwendete Modell auf der Annahme von kurzen Stromleitungen, was bedeutet, dass die Phasendifferenzen zwischen benachbarten Netzknoten gegen null gehen. Mit anderen Worten beruht das Modell auf der Annahme, dass die in einem Netzknoten des Stromnetzes erzeugte Wirkleistung und Blindleistung unmittelbar (d.h. instantan bzw. ohne Zeitverzögerung) in jedem anderen Netzknoten des Stromnetzes bereitstehen.

In dem nachfolgend beschriebenen Verfahren wird von dem Stromnetz PG der Fig. 1 ausgegangen, welches einen einzelnen netzbildenden Generatorknoten in der Form eines Dieselgenerators umfasst. Das Verfahren ist jedoch auch für mehrere netzbildende Netzknoten anwendbar, wobei die netzbildenden Knoten auch andere Arten von Generatoren (z.B. Gasturbinen) oder elektrische Energiespeicher darstellen können. Darüber hinaus kann der netzbildende Erzeugerknoten, der im Folgenden durch den Index M (M = Master) spezifiziert wird, auch eine Mehrzahl von identischen Aggregaten umfassen, die parallel betrieben werden, so dass sie als ein aggregierter einzelner Erzeugerknoten modelliert werden.

Wie erwähnt, beinhaltet das Netz PG der Fig. 1 mehrere netzstützende Erzeugerknoten, die im Folgenden mit Indizes i bzw. j bezeichnet werden, wobei ferner durch die Variable N die Gesamtanzahl der netzstützenden Erzeugerknoten spezifiziert wird. Dabei können mehr als drei der in Fig. 1 dargestellten netzstützenden Erzeugerknoten vorgesehen sein. Die netzstützenden Erzeugerknoten können ganz oder teilweise auch andere regenerative Energieerzeugungsanlagen als Photovoltaikanlagen darstellen, wie z.B. Windkraftanlagen.

Die in dem Stromnetz auftretende passive Last L ist in dem hier beschriebenen Modell wie folgt gegeben:

$$P_L = \frac{U^2}{R_L} \tag{1a}$$

$$Q_L = \frac{U^2}{X_L} \tag{1b}$$

Dabei bezeichnet $U$ die Spannungsamplitude und $R_L$ ist der ohmsche Widerstand (oder Wirkwiderstand) und $X_L$ ist der Blindwiderstand (oder Reaktanz) der Last L.

Unter der obigen Annahme von kurzen Stromleitungen wird die Wirkleistung bzw. Blindleistung des netzbildenden Erzeugerknotens M durch folgende Gleichungen beschrieben:

$$P_M = P_L - \sum_{j=1}^{N} P_{Cj} \tag{2a}$$

$$Q_M = Q_L - \sum_{j=1}^{N} Q_{Cj} \qquad (2\text{b})$$

Dabei bezeichnet $P_M$ die Wirkleistung und $Q_M$ die Blindleistung, die von dem netzbildenden Erzeugerknoten bereitgestellt wird. $P_{Cj}$ ist die Wirkleistung und $Q_{Cj}$ die Blindleistung, die von dem j-ten netzstützenden Erzeugerknoten (d.h. dem entsprechenden Inverter der regenerativen Energieerzeugungsanlage) bereitgestellt wird.

Der netzbildende Erzeugerknoten M in der Form des Dieselgenerators G verwendet eine Proportionalregelung, bei der die Frequenz und die Spannung des Dieselgenerators in Abhängigkeit von der durch diesen Knoten eingespeiste Wirkleistung und Blindleistung eingestellt werden. Die Proportionalregelung zur Einstellung der Frequenz *f(P)* und der Spannung *U(Q)* lauten dabei wie folgt:

$$f = f_0 - \frac{1}{k_M^f}\left(P_M - P_{M,0}\right) \qquad (2\text{c})$$

$$U = U_M = U_{M,0} - k_M^Q\left(Q_M - Q_{M,0}\right) = U_{M,0} - k_M^Q\left(Q_L - \sum_{j=1}^{N} Q_{Cj} - Q_{M,0}\right) \qquad (2\text{d})$$

Dabei bezeichnen f bzw. U die Frequenz bzw. Spannung für den Erzeugerknoten M. $k_M^f$ ist das (inverse) Droop-Gain für die Frequenzregelung und $k_M^Q$ das Droop-Gain für die Spannungsregelung, wobei diese Droop-Gains Proportionalitätsfaktoren im Sinne der Ansprüche darstellen. Ferner entspricht $f_0$ einer Referenzfrequenz im Stromnetz, welche die Nennfrequenz des Netzes (z.B. 50 Hz) darstellt. Darüber hinaus ist $P_{M,0}$ eine Referenzwirkleistung, $U_{M,0}$ eine Referenzspannung und $Q_{M,0}$ eine Referenzblindleistung der Proportionalregelung.

Alternativ kann der netzbildende Erzeugerknoten M eine Proportionalregelung verwenden, bei der die Frequenz und die Spannung des Dieselgenerators in Abhängigkeit von dem durch diesen Knoten eingespeisten Wirkstrom und Blindstrom eingestellt werden. Die Proportionalregelung zur Einstellung der Frequenz $f(I_{PM})$ und der Spannung $U(I_{QM})$ lauten dabei wie folgt:

$$f = f_0 - \frac{1}{k_M^f}\left(I_{PM} - I_{PM,0}\right) \qquad (2\text{e})$$

$$U = U_M = U_{M,0} - k_M^Q\left(I_{QM} - I_{\ QM,0}\right) \qquad (2\text{f})$$

Dabei ist $I_{PM,0}$ der Referenzwirkstrom und $I_{QM,0}$ der Referenzblindstrom der Proportionalregelung. Die Größen $I_{PM}$ und $I_{QM}$ bezeichnen die aktuell eingespeisten Wirk- und Blindströme. In der weiteren Ausführung wird nur die Variante (2c), (2d) verwendet. Wegen der nährungsweisen Äquivalenzen $I_{PM} \approx \frac{P_M}{\sqrt{3}U_N}$ und $I_{QM} \approx \frac{Q_M}{\sqrt{3}U_N}$ ($U_N$ entspricht der Nennspannung), können nachfolgende Gleichungen auch für den Fall (2e), (2f) angewendet werden, indem die Droop-Gains $k_M^f$ und $k_M^Q$ mit dem Faktor $\sqrt{3}U_N$ skaliert werden.

Es ist zu beachten, dass die obige Gleichung (2c) den stationären Zustand des Dieselgenerators repräsentiert. Netzbildende Dieselgeneratoren weisen eine rotierende Masse mit einem Trägheitsmoment m und einem Dämpfungsfaktor D auf, der sehr klein ist. Die rotierende Masse rotiert im stationären Zustand synchron mit der Netzfrequenz f. Der Dieselgenerator führt dabei eine mechanische Leistung $P_{mech}$ zu, um die obige stationäre Frequenz f gemäß Gleichung (2c) zu erhalten. Die mechanische Leistung $P_{mech}$ des Dieselgenerators ist wie folgt gegeben:

$$P_{mech} = P_{M,0} - k_M^f(f - f_0) \qquad (2\text{g})$$

Mit dem bekannten Modell der rotierenden Masse und der obigen Gleichung (2a) erhält man hieraus:

$$mf\dot{} + Df = P_{mech} - P_M = P_{M,0} - k_M^f(f - f_0) - P_L + \sum_{j=1}^{N} P_{Cj} \qquad (2h)$$

Da D vernachlässigbar klein ist und im stationären Zustand $\dot{f} = 0$ gilt, folgt hieraus $P_{mech} = P_M$. In Kombination mit Gleichung (2e) ergibt sich somit die Frequenzregelung der Gleichung (2c).

Wird anstatt eines Dieselgenerators ein elektrischer Energiespeicher als netzbildender Erzeugerknoten verwendet, werden als Proportionalregelung anstatt der Gleichungen (2c) und (2d) die nachfolgenden Gleichungen (2i) und (2j) verwendet:

$$f = f_M = f_0 - k_M^P(P_M - P_{M,0}) = f_0 - k_M^P\left(P_L - \sum_{j=1}^{N}(P_{Cj}) - P_{M,0}\right) \qquad (2i)$$

$$U = U_M = U_{M,0} - k_M^Q(Q_M - Q_{M,0}) = U_{M,0} - k_M^Q\left(Q_L - \sum_{j=1}^{N}(Q_{Cj}) - Q_{M,0}\right) \qquad (2j)$$

Dabei sind wiederum entsprechende Droop-Gains $k_M^P$ und $k_M^Q$ sowie Referenzwerte $P_{M,0}$, $U_{M,0}$ und $Q_{M,0}$ festgelegt. $f_0$ entspricht der obigen Referenzfrequenz im Stromnetz. Alternative Ausführungsformen mit Wirkstrom und Blindstrom sind

$$f = f_M = f_0 - k_M^P(I_{PM} - I_{PM,0}) \qquad (2k)$$

$$U = U_M = U_{M,0} - k_M^Q(I_{QM} - I_{QM,0}) \qquad (2l)$$

Dabei sind wiederum entsprechende Referenzwerte $I_{PM,0}$ und $I_{QM,0}$ festgelegt. Wie zuvor beschrieben, können die Gleichungen (2k), (2l) anstelle von (2i), (2j) verwendet werden, wenn die zugehörigen Droop-Gains $k_M^P$ und $k_M^Q$ mit dem Faktor $\sqrt{3}U_N$ skaliert werden.

Im Unterschied zu dem netzbildenden Erzeugerknoten M ist die Proportionalregelung für den i-ten netzstützenden Erzeugerknoten wie folgt ausgestaltet:

$$P_{Ci} = P_{Ci,0} - k_{Ci}^P(f_{Ci} - f_0) \qquad (3a)$$

$$Q_{Ci} = Q_{Ci,0} - k_{Ci}^Q(U_{Ci} - U_{Ci,0}) \qquad (3b)$$

Dabei ist $P_{Ci}$ die Wirkleistung und $Q_{Ci}$ die Blindleistung im i-ten netzstützenden Erzeugerknoten, welche in Abhängigkeit von der Frequenz $f_{Ci}$ und Spannung $U_{Ci}$ im i-ten netzstützenden Erzeugerknoten eingestellt werden. Die Werte $P_{Ci,0}, Q_{Ci,0}, f_0, U_{Ci,0}$ sind wiederum Referenzpunkte der Proportionalregelung und entsprechen einer Referenzwirkleistung, einer Referenzblindleistung, der bereits oben definierten Referenzfrequenz sowie einer Referenzspannung. Die Größen $k_{Ci}^P, k_{Ci}^Q$ sind wiederum Droop-Gains, die den Proportionalitätsfaktoren im Sinne der Ansprüche entsprechen.

Alternative Ausführungsformen sind:

$$I_{PCi} = I_{PCi,0} - k_{Ci}^P(f_{Ci} - f_0) \qquad (3c)$$

$$I_{QCi} = I_{QCi,0} - k_{Ci}^Q(U_{Ci} - U_{Ci,0}) \qquad (3d)$$

Dabei ist $I_{PCi}$ der Wirkstrom und $I_{QCi}$ der Blindstrom im i-ten netzstützenden Erzeugerknoten, welche in Abhängigkeit von der Frequenz $f_{Ci}$ und Spannung $U_{Ci}$ im i-ten netzstützenden Erzeugerknoten eingestellt werden. Die Werte $I_{PCi,0}, I_{QCi,0}$ entsprechen einem Referenzwirkstrom und einem Referenzblindstrom. Wie zuvor beschrieben, können die Gleichungen (3c), (3d) anstelle von (3a), (3b) verwendet werden, wenn die zugehörigen Droop-Gains $k_{Ci}^P$ und $k_{Ci}^Q$ mit dem Faktor $\sqrt{3} U_N$ skaliert werden. Das Ausführungsbeispiel wird mit der Variante (3a), (3b) fortgesetzt.

Im Rahmen der hier beschriebenen Modellierung des Stromnetzes wird die Dynamik der netzstützenden Erzeugerknoten durch einen PLL-Algorithmus beschrieben, der in erster Näherung ein Tiefpassverhalten besitzt. Dieser Algorithmus schätzt die Frequenz und die Spannung im i-ten netzstützenden Erzeugerknoten durch die Werte $f_{Ci}$ und $U_{Ci}$ wie folgt ab:

$$\dot{f}_{Ci} = -\frac{1}{T_{Ci}^f}(f_{Ci} - f) \qquad\qquad (3\text{e})$$

$$\dot{U}_{Ci} = -\frac{1}{T_{Ci}^U}(U_{Ci} - U) \qquad\qquad (3\text{f})$$

Dabei bezeichnen $T_{Ci}^f, T_{Ci}^U$ Zeitkonstanten, deren Wert durch einen Fachmann geeignet festgelegt werden kann. $f$ und $U$ sind die Frequenz und Spannung im netzbildenden Erzeugerknoten.

Durch Kombination der obigen Gleichungen ergibt sich für ein Inselnetz, welches einen einzelnen Dieselgenerator als netzbildenden Erzeugerknoten sowie mehrere netzstützende Erzeugerknoten enthält, folgendes dynamisches Modell für die Wirkleistung und die Frequenz:

$$\frac{d}{dt}\begin{pmatrix} f \\ f_C \end{pmatrix} = \begin{pmatrix} -\frac{D+k_M^f}{m} & -\frac{1}{m}(k_C^P)^T \\ (T_C^f)^{-1} & -\text{diag}\left((T_C^f)^{-1}\right) \end{pmatrix}\begin{pmatrix} f \\ f_C \end{pmatrix} + \frac{1}{m}\begin{pmatrix} k_M^f + \mathbf{1}^T k_C^P & -1 & 1 & +\mathbf{1}^T \\ 0 & 0 & 0 & 0 \end{pmatrix}\begin{pmatrix} f_0 \\ P_L \\ P_{M,0} \\ P_{C,0} \end{pmatrix} \quad (4\text{a})$$

$$\begin{pmatrix} f \\ P_C \end{pmatrix} = \begin{pmatrix} 1 & 0 \\ 0 & -\text{diag}(k_C^P) \end{pmatrix}\begin{pmatrix} f \\ f_C \end{pmatrix} + \begin{pmatrix} 0 & 0 & 0 & 0 \\ k_C^P & 0 & 0 & I \end{pmatrix}\begin{pmatrix} f_0 \\ P_L \\ P_{M,0} \\ P_{C,0} \end{pmatrix} \quad (4\text{b})$$

Dabei sind die Vektoren in den Gleichungen (4a) und (4b) wie folgt definiert:

$$f_C = \text{vec}(f_{Ci}), k_C^P = \text{vec}(k_{Ci}^P), T_C^f = \text{vec}\left(T_{Ci}^f\right), P_C = \text{vec}(P_{Ci}), P_{C,0} = \text{vec}\left(P_{Ci,0}\right)$$

$$\mathbf{1} = \text{vec}(1), \left(T_C^f\right)^{-1} = \text{vec}\left(1 \Big/ T_{Ci}^f\right)$$

Ferner ergibt sich folgendes dynamisches Modell für die Blindleistung und die Spannung:

$$\dot{U}_C = -\text{diag}((T_C^U)^{-1})\left(I + \text{diag}\left(k_C^Q\right)\right)U_C$$

$$+(T_C^U)^{-1}\begin{pmatrix} 1 & \left(k_C^Q\right)^T & -k_M^Q & k_M^Q & k_M^Q \mathbf{1}^T \end{pmatrix}\begin{pmatrix} U_{M,0} \\ U_{C,0} \\ Q_L \\ Q_{M,0} \\ Q_{C,0} \end{pmatrix} \quad (5\text{a})$$

$$\begin{pmatrix} U \\ Q_C \end{pmatrix} = \begin{pmatrix} -k_M^Q (k_C^Q)^T \\ -\operatorname{diag}(k_C^Q) \end{pmatrix} U_C + \begin{pmatrix} 1 & \operatorname{diag}(k_C^Q) & -k_M^Q & k_M^Q & k_M^Q \mathbf{1}^T \\ 0 & \operatorname{diag}(k_C^Q) & 0 & 0 & I \end{pmatrix} \begin{pmatrix} U_{M,0} \\ U_{C,0} \\ Q_L \\ Q_{M,0} \\ Q_{C,0} \end{pmatrix} \qquad (5\mathrm{b})$$

Dabei sind die Vektoren in den Gleichungen (5a) und (5b) wie folgt definiert:

$$U_C = \operatorname{vec}(U_{Ci}), U_{C0} = \operatorname{vec}(U_{Ci,0}), k_C^Q = \operatorname{vec}(k_{Ci}^Q), T_C^U = \operatorname{vec}(T_{Ci}^U), Q_C = \operatorname{vec}(Q_{Ci}), Q_{C,0} = \operatorname{vec}(Q_{Ci,0})$$

Die Dynamik der obigen Gleichungen (4a), (4b) und die Dynamik der obigen Gleichungen (5a), (5b) sind über die Lastgleichungen (1a) und (1b) gekoppelt, welche die Wirkleistung $P_L$ und Blindleistung $Q_L$ der Last mit der Spannung $U$ koppeln. Es wird jedoch angenommen, dass sich die Spannungsamplitude $U$ nur marginal verändert, so dass die beiden Dynamiken unabhängig voneinander sind.

Basierend auf der obigen Modellierung wird in der hier beschriebenen Ausführungsform ein Optimierungsproblem gelöst, gemäß dem die Kosten der Energieerzeugung des Generators minimiert werden, d.h. die meiste Energie für die Last L soll durch die regenerativen netzstützenden Erzeugerknoten generiert werden, da diese Energie wesentlich kostengünstiger ist als die Generierung der Energie durch Verbrennung von fossilem Brennstoff. Dabei werden Nebenbedingungen in Bezug auf maximale Transienten (d.h. maximale zeitliche Veränderungen) der Wirkleistung in den netzstützenden Erzeugerknoten sowie in Bezug auf die Frequenz und die Spannung in dem netzbildenden Erzeugerknoten berücksichtigt. Hierdurch wird ein stabiler Netzbetrieb gewährleistet und ferner Überschwinger bei der Generierung der Wirkleistung in den netzstützenden Erzeugerknoten vermieden.

Mathematisch wird dieses Optimierungsproblem wie folgt dargestellt:

$$\min_{P_0, Q_0, K} P_M \qquad (6\mathrm{a})$$

Unter der Bedingung von Gleichung (2a) (6b)

$$\|P_{Ci}(t)\|_\infty \le P_{Ci,max} \quad \forall i, \forall P_L \in TP_L \qquad (6\mathrm{c})$$

$$\|f(t) - f_0\|_\infty \le \Delta f_{max} \quad \forall P_L \in TP_L \qquad (6\mathrm{d})$$

$$\|U(t) - U_N\|_\infty \le \Delta U_{max} \quad \forall Q_L \in TQ_L \qquad (6\mathrm{e})$$

Die Vektoren in den Gleichungen sind wie folgt definiert:

$$P_0 = (P_{M,0}, P_{C,0})^T, Q_0 = (Q_{M,0}, Q_{C,0})^T, K = \left( k_M^f, (k_C^P)^T, k_M^Q, (k_C^Q)^T \right)^T$$

Die Größen $P_{Ci,max}$ sind obere Grenzen für die Wirkleistung in den jeweiligen netzstützenden Erzeugerknoten. Ferner ist $\Delta f_{max}$ eine obere Grenze für Frequenzschwankungen und $\Delta U_{max}$ eine obere Grenze für Spannungsschwankungen im netzbildenden Erzeugerknoten. $U_N$ bezeichnet eine vorgegebene Nennspannung in dem netzbildenden Erzeugerknoten. $TP_L$ ist ein vorgegebener Satz von möglichen Lastwirkleistungstrajektorien, d.h. eine Menge von vorbestimmten möglichen zeitlichen Veränderungen der Wirkleistung der Last, von denen angenommen wird, dass diese Veränderungen in dem betrachteten Stromnetz auftreten können. Analog ist $TQ_L$ ein vorgegebener Satz von möglichen Blindleistungstrajektorien, d.h. eine Menge von vorbestimmten möglichen zeitlichen Veränderungen der Blindleistung der Last, von denen angenommen wird, dass diese Veränderungen in dem betrachteten Stromnetz auftreten können. Ferner bezeichnet $\|\cdot\|_\infty$ die an sich bekannte Unendlichkeitsnorm, welche das Betragsmaximum für alle Zeitpunkte $t \ge 0$

des Arguments in der Norm ist.

Für die obige Gleichung (6a) wird $P_M$ über Gleichung (2a) in Kombination mit Gleichungen (4a) und (4b) berechnet. Dabei wird das Differentialgleichungssystem gemäß Gleichung (4a) gelöst und die sich hieraus ergebenden Frequenzen $f$ und $f_C$ in Gleichung (4b) eingesetzt. Hieraus ergibt sich dann $P_C$, das dann in die Gleichung (2a) eingesetzt wird. Die Größe $P_{Ci}(t)$ aus Gleichung (6c) ergibt sich dadurch, dass das Differentialgleichungssystem gemäß Gleichung (4a) gelöst wird und die sich hieraus ergebenden Frequenzen $f$ und $f_C$ in Gleichung (4b) eingesetzt werden. Die Frequenz $f(t)$ aus Gleichung (6d) wird durch Lösung des Differentialgleichungssystems gemäß Gleichung (4a) bestimmt. Die Größe $U(t)$ ergibt sich dadurch, dass das Differentialgleichungssystem gemäß Gleichung (5a) gelöst wird und die sich hieraus ergebende Spannung $U_C$ in Gleichung (5b) eingesetzt wird.

Die Gleichung (6c) wird verwendet, um Überschwinger in den Wirkleistungen der netzstützenden Erzeugerknoten zu vermeiden, so dass es nicht zu Beschädigungen oder Abschaltungen der Wechselrichter in den Photovoltaikanlagen kommt. Die Gleichungen (6d) und (6e) begrenzen die Frequenz- und Spannungsabweichung, um einen stabilen Netzbetrieb und eine gute Spannungsqualität zu gewährleisten. Das Optimierungsproblem gemäß den Gleichungen (6a) bis (6e) kann mit an sich bekannten Methoden gelöst werden, z.B. über eine $H_\infty$, $H_2$ oder $I_1$ Robustheits-Analyse. Entsprechende Algorithmen finden sich z.B. in der Druckschrift [3]. Im Besonderen können die obigen Nebenbedingungen (6c), (6d), (6e) als Matrix-Ungleichungen umformuliert werden, was ebenfalls in der Druckschrift [3] beschrieben ist. Die dort dargelegten Algorithmen für die Bedingungen (6c), (6d) und (6e) garantieren auch eine interne Stabilität des Stromnetzes gegenüber Laständerungen. Ggf. können weitere Nebenbedingungen hinzugefügt werden, insbesondere obere und untere Grenzen für Elemente der Vektoren $K, P_0$ und $Q_0$.

Insgesamt werden basierend auf der Lösung des obigen Optimierungsproblems geeignete Werte für die Proportionalitätsfaktoren sowie die Referenzwirkleistungen und die Referenzblindleistungen der Proportionalregler in den netzbildenden und netzstützenden Erzeugerknoten bestimmt. Hierdurch wird im Betrieb des Stromnetzes eine optimierte Energieerzeugung mit möglichst geringen Erzeugungskosten erreicht. Das Verfahren kann dabei z.B. vor Inbetriebnahme des Stromnetzes ausgehend von einer (durchschnittlichen) Wirkleistung und Blindleistung der Last bestimmt werden. Ebenso kann das obige Verfahren ggf. auch während des Betriebs des Stromnetzes zur Aktualisierung entsprechender Parameter der Proportionalregler bei sich verändernder Last im Stromnetz genutzt werden.

In einem zweiten Ausführungsbeispiel wird gezeigt, wie das Stromnetz mit mehreren netzbildenden Knoten und ohne die Annahme von kurzen Stromleitungen modelliert werden kann. Dabei wird von dem PG der Fig. 1 ausgegangen, wobei der Erzeugerknoten N1, N2, N3 und N4 nunmehr jedoch jeweils einen netzbildenden Generatorknoten in der Form eines Dieselgenerators oder eines Energiespeichers darstellen. Das Verfahren ist auch für weitere netzbildende Netzknoten in Form von anderen Arten von Generatoren oder zusätzliche netzstützende Knoten verwendbar.

Im Gegensatz zum Vorherigen Ausführungsbeispiel mit vernachlässigbaren Stromleitungen wird nun ein linearisiertes Lastflussmodell verwendet, um die Wirkleistung bzw. Blindleistung der Knoten zu beschreiben:

$$P_i(t) \approx \sum_{j \in N_i} \left( \frac{U_{iN}}{r_{ij}^2 + x_{ij}^2} \left( r_{ij}\big(U_i(t) - U_j(t)\big) + x_{ij} U_{jN}\big(\theta_i(t) - \theta_j(t)\big) \right) \right), \quad (7)$$

$$Q_i(t) \approx \sum_{j \in N_i} \left( \frac{U_{iN}}{r_{ij}^2 + x_{ij}^2} \left( x_{ij}\big(U_i(t) - U_j(t)\big) - r_{ij} U_{jN}\big(\theta_i(t) - \theta_j(t)\big) \right) \right). \quad (8)$$

Dabei bezeichnen $P_i$ und $Q_i$ die vom Knoten $i$ eingespeiste Wirk- und Blindleistung. Die Stromleitung zwischen den Knoten $i$ und $j$ weist einen Widerstand $r_{ij}$ und eine Reaktanz $x_{ij}$ auf. Die Spannungsamplituden an den Knoten $i$ und $j$ sind $U_i, U_j$, wobei $U_{iN}, U_{jN}$ die Nennspannungen an den Knoten $i$ und $j$ bezeichnen. Die Spannungsphasen an den Knoten $i$ und $j$ sind $\theta_i, \theta_j$. Zur Verdeutlichung sind die zeitlich veränderlichen Größen als Funktion der Zeit t dargestellt, während alle übrigen Größen konstante Parameter sind. Die Menge $N_i$ bezeichnet alle Nachbarknoten von Knoten $i$.

Die Gleichungen (7) und (8) können auch in Matrizenschreibweise angegeben werden:

$$\begin{pmatrix} P \\ Q \end{pmatrix} = \begin{pmatrix} \mathrm{diag}(U_{iN})G & -\mathrm{diag}(U_{iN})B\,\mathrm{diag}(U_{iN}) \\ -\mathrm{diag}(U_{iN})B & -\mathrm{diag}(U_{iN})G\,\mathrm{diag}(U_{iN}) \end{pmatrix} \begin{pmatrix} U \\ \theta \end{pmatrix}$$

Dabei sind die Vektoren und Matrizen wie folgt definiert:

$$\theta = \mathrm{vec}(\theta_i), U = \mathrm{vec}(U_i), P = \mathrm{vec}(P_i), Q = \mathrm{vec}(Q_i),$$

$$G = [G_{ij}]; \ G_{ij} = \begin{cases} \displaystyle\sum_{j \in N_i} \frac{r_{ij}}{r_{ij}^2 + x_{ij}^2} & \text{für } i = j \\[4mm] -\dfrac{r_{ij}}{r_{ij}^2 + x_{ij}^2} & \text{für } i \neq j \end{cases}$$

$$B = [B_{ij}]; \ B_{ij} = \begin{cases} -\displaystyle\sum_{j \in N_i} \frac{x_{ij}}{r_{ij}^2 + x_{ij}^2} & \text{für } i = j \\[4mm] +\dfrac{x_{ij}}{r_{ij}^2 + x_{ij}^2} & \text{für } i \neq j \end{cases}$$

Die Spannungsphasen der einzelnen Knoten können durch Integration der Spannungsfrequenzen an dem entsprechenden Knoten berechnet werden. Die Spannungsfrequenzen ergeben sich für konventionelle Generatoren aus Gleichung (2c) und für Energiespeicher aus Gleichung (2h) wie folgt:

$$\dot{\theta}_i(t) = f_0 - \frac{1}{k_{Mi}^f}\left(P_{Mi}(t) - P_{Mi,0}\right) \qquad (2c\text{'})$$

$$m_i\ddot{\theta}_i(t) + D_i\dot{\theta}_i(t) = P_{mech}(t) - P_{Mi}(t) = P_{Mi,0} - k_{Mi}^f\left(\dot{\theta}_i(t) - f_0\right) - P_{Mi}(t) \qquad (2h\text{'})$$

Dabei bezeichnen $\dot{\theta}_i$ die Frequenz am Erzeugerknoten i. $k_{Mi}^f$ ist das (inverse) Droop-Gain für die Frequenzregelung am Knoten i, wobei diese Droop-Gains Proportionalitätsfaktoren im Sinne der Ansprüche darstellen. Ferner entspricht $f_0$ einer Referenzfrequenz im Stromnetz, welche die Nennfrequenz des Netzes (z.B. 50 Hz) darstellt. Darüber hinaus ist $P_{Mi,0}$ eine Referenzwirkleistung. Die Parameter $m_i$ und $D_i$ beschreiben das Trägheitsmoment und den Dämpfungsfaktor des Generators im Knoten i.

Analog kann die Dynamik der Spannungsamplitude $U_{Mi}$ für die netzbildenden Knoten i ähnlich wie in Gleichung (3f) und (2d) wie folgt beschrieben werden:

$$\dot{U}_{Mi} = -\frac{1}{T_{Mi}^U}\left(U_{Mi} - U_{Mi,0} + k_{Mi}^Q\left(Q_{Mi} - Q_{Mi,0}\right)\right) \qquad (2d\text{'})$$

Dabei bezeichnet $T_{Mi}^U$ eine Zeitkonstante, deren Wert durch einen Fachmann geeignet festgelegt werden kann. $k_{Mi}^Q$ ist das Droop-Gain für die Spannungsregelung, wobei diese Droop-Gains Proportionalitätsfaktoren im Sinne der Ansprüche darstellen. Ferner ist $U_{Mi,0}$ eine Referenzspannung und $Q_{Mi,0}$ eine Referenzblindleistung der Proportionalregelung im Knoten i.

Nun können die dynamischen Modelle der netzbildenden Knoten (2c'), (2d'), (2h') mit den Lastknoten (Gleichungen (1a) und (1b)) über die linearisierte Lastflussgleichung (7) gekoppelt werden (hierbei werden $P_{Mi} = P_i$ und $Q_{Mi} = Q_i$ gesetzt). Dadurch erhält man folgende Gleichungen analog zu Gleichungen (4a) und (5a) im vorherigen Ausführungsbeispiel:

$$\mathrm{diag}(m_i)\ddot{\theta} + \mathrm{diag}(D_i)(\dot{\theta}) + \mathrm{diag}(k_{Mi}^f)(\dot{\theta} - f_0\mathbf{1}) = P_{M,0} - (\mathrm{diag}(U_{iN})G\,U -$$
$$\mathrm{diag}(UiN)B\mathrm{diag}(UiN)\,\theta \qquad (9a)$$

$$\text{diag}\big(T_{Mi}^U\big)\dot{U} =$$
$$-\text{U} + U_{M,0} + \text{diag}\big(k_{Mi}^Q\big)(Q_{M,0} \pm (-\text{diag}(U_{iN})B\,U \pm \text{diag}(U_{iN})G\text{diag}(U_{iN})\,\theta)) \qquad (9\text{b})$$

$$\begin{pmatrix} P \\ Q \end{pmatrix} = \begin{pmatrix} \text{diag}(U_{iN})G & -\text{diag}(U_{iN})B\text{diag}(U_{iN}) \\ -\text{diag}(U_{iN})B & -\text{diag}(U_{iN})G\text{diag}(U_{iN}) \end{pmatrix} \begin{pmatrix} U \\ \theta \end{pmatrix} \qquad (9\text{c})$$

Dabei sind die Vektoren und Matrizen in den Gleichungen (9a), (9b) und (9c) wie folgt definiert:

$$\theta = \text{vec}(\theta_i), U = \text{vec}(U_i), P_{M,0} = \text{vec}\big(P_{Mi,0}\big), U_{M,0} = \text{vec}\big(U_{Mi,0}\big), Q_{M,0} = \text{vec}\big(Q_{Mi,0}\big),$$

$$G = \big[G_{ij}\big]; \; G_{ij} = \begin{cases} \displaystyle\sum_{j \in N_i} \frac{r_{ij}}{r_{ij}^2 + x_{ij}^2} & \text{für } i = j \\[4mm] -\dfrac{r_{ij}}{r_{ij}^2 + x_{ij}^2} & \text{für } i \neq j \end{cases}$$

$$B = \big[B_{ij}\big]; \; B_{ij} = \begin{cases} \displaystyle-\sum_{j \in N_i} \frac{x_{ij}}{r_{ij}^2 + x_{ij}^2} & \text{für } i = j \\[4mm] +\dfrac{x_{ij}}{r_{ij}^2 + x_{ij}^2} & \text{für } i \neq j \end{cases}$$

Hierbei gilt für einen netzbildenden Knoten, an dem ein Energiespeicher angeschlossen ist, $m_i = 0$, $D_i = 0$ und für einen Lastknoten $m_i = 0, D_i = 0, k_{Mi}^f = 0, k_{Mi}^Q = 0, P_{Mi} = -P_{Li}, T_{Mi}^U = 0$. Das sich ergebende Differential-Algebraische Gleichungssystem kann von einem Fachmann in ein Differentialgleichungssystem mit Eingang $P_L$ und Ausgängen P und Q umgewandelt werden.

Mithilfe des dynamischen Modells der Gleichungen (9a) bis (9c) kann nun ein Optimierungsproblem analog zu Gleichungen (6a) bis (6e) erstellt werden. In diesem Ausführungsbeispiel wird davon ausgegangen, dass die verschiedenen netzbildenden Erzeugerknoten unterschiedliche Betriebskosten $c_i$ pro eingespeister Leistung $P_{Mi}$ haben. Der Kostenvektor ergibt sich somit zu $c = \text{vec}(c_i)$. Das resultierende Optimierungsproblem ist somit

$$\min_{P_0, Q_0, K} c^T P_M \qquad (10\text{a})$$

Unter der Bedingung von Gleichungen (9a) bis (9c) (10b)

$$\|P_{Mi}(t)\|_\infty \leq P_{Mi,max} \quad \forall i, \forall P_L \in TP_L \qquad (10\text{c})$$

$$\|f(t) - f_0\|_\infty \leq \Delta f_{max} \quad \forall P_L \in TP_L \qquad (10\text{d})$$

$$\|U(t) - U_N\|_\infty \leq \Delta U_{max} \quad \forall Q_L \in TQ_L \qquad (10\text{e})$$

Basierend auf der Lösung dieses Optimierungsproblems können geeignete Werte für die Proportionalitätsfaktoren sowie die Referenzwirkleistungen und die Referenzblindleistungen der Proportionalregler in den netzbildenden Erzeugerknoten und ggf. auch in netzstützenden Erzeugerknoten bestimmt werden.

Die im Vorangegangenen beschriebenen Ausführungsformen des erfindungsgemäßen Verfahrens weisen eine Reihe von Vorteilen auf. Insbesondere wird auf einfache Weise ein optimierter Betrieb eines Stromnetzes durch ein einfaches rechnergestütztes Verfahren erreicht, welches basierend auf einem Modell des Stromnetzes geeignete Werte für die Proportionalregler der Netzknoten berechnet, ohne dass hierzu aufwändige Simulationen durchgeführt werden müssen. Dabei ist der Betrieb des Stromnetzes daraufhin optimiert, dass möglichst viel Energie durch regenerative Energiequellen bereitgestellt wird, wobei jedoch gleichzeitig ein stabiler Netzbetrieb mit geringen Spannungs- bzw. Frequenzschwankungen erreicht wird.

Literaturverzeichnis:

[1] Lopes, et al., "PV Hybrid Mini-Grids: Applicable Control Methods for Various Situations", International Energy Agency: Photovoltaic Power Systems Programme, 2012.

[2] Markus Jostock et al., "Structured Analysis of Arbitrary Island Grids", 4th IEEE PES Innovative Smart Grid Technologies Europe (ISGT Europe), 6. - 8. Oktober 2013, Kopenhagen.

[3] Scherer, C. and Weiland, S.; Linear Matrix Inequalities in Control; lecture notes, http://www.dcsc.tudelft.nl/~cscherer/lmi/notes05.pdf (2005).

**Patentansprüche**

1. Verfahren zur rechnergestützten Konfiguration eines elektrischen Stromnetzes (PG) mit einer Mehrzahl von über Stromleitungen (PL) verbundenen Netzknoten (N1, N2, ..., N5), umfassend einen oder mehrere erste Netzknoten (N1), wobei der oder die ersten Netzknoten (N1) im Betrieb des Stromnetzes (PG) Wirkleistung für eine Last (L) im Stromnetz (PG) bereitstellen, wobei ein jeweiliger erster Netzknoten (N1) ein netzbildender Erzeugerknoten ist, in dem mittels eines Regelverfahrens die Amplitude und Frequenz der Spannung in diesem Netzknoten (N1) einerseits in Abhängigkeit von der durch diesen Netzknoten (N1) eingespeisten Blindleistung oder dem durch diesen Netzknoten (N1) eingespeisten Blindstrom und andererseits in Abhängigkeit von der durch diesen Netzknoten (N1) eingespeisten Wirkleistung oder dem durch diesen Netzknoten (N1) eingespeisten Wirkstrom geregelt werden, **dadurch gekennzeichnet, dass**

   - Wirkleistungsveränderungen der ersten Netzknoten (N1) für jeweilige vorgegebene Wirkleistungsveränderungen der Last (L) basierend auf einem dynamischen Modell des Stromnetzes (PG) ermittelt werden;
   - Parameter der Regelverfahren der jeweiligen ersten Netzknoten (N1) derart eingestellt werden, dass mittels der ermittelten Wirkleistungsveränderungen der ersten Netzknoten (N1) ein Optimierungsproblem mit dem Ziel eines in Bezug auf ein oder mehrere Optimierungskriterien optimalen Betriebs des Stromnetzes gelöst wird, wobei es das Ziel des Optimierungsproblems ist, dass möglichst wenig der für die Last (L) bereitgestellten Wirkleistung von dem oder den ersten Netzknoten (N1) stammt.

2. Verfahren nach Anspruch 1, **dadurch gekennzeichnet, dass** die Netzknoten (N1, N2, ..., N5) ferner einen oder mehrere zweite Netzknoten (N2, N3, N4) umfassen, welche im Betrieb des Stromnetzes (PG) Wirkleistung für die Last im Stromnetz (PG) bereitstellen, wobei ein jeweiliger zweiter Netzknoten (N2, N3, N4) ein netzstützender Erzeugerknoten in der Form einer regenerativen Energieerzeugungsanlage (PV) ist, in dem mittels eines Regelverfahrens einerseits die durch diesen Netzknoten (N2, N3, N4) eingespeiste Wirkleistung oder der durch diesen Netzknoten (N2, N3, N4) eingespeiste Wirkstrom und andererseits die durch diesen Netzknoten (N2, N3, N4) eingespeiste Blindleistung oder der durch diesen Netzknoten (N2, N3, N4) eingespeiste Blindstrom in Abhängigkeit von der Frequenz und Amplitude der Spannung in diesem Netzknoten geregelt werden, wobei

   - ferner Wirkleistungsveränderungen der zweiten Netzknoten (N2, N3, N4) für jeweilige vorgegebene Wirkleistungsveränderungen der Last (L) basierend auf dem dynamischen Modell des Stromnetzes (PG) ermittelt werden, und
   - die Regelverfahren der jeweiligen ersten und zweiten Netzknoten (N1, N2, N3, N4) derart eingestellt werden, dass mittels der ermittelten Wirkleistungsveränderungen der ersten und zweiten Netzknoten (N1, N2, N3, N4) das Optimierungsproblem mit dem Ziel eines in Bezug auf ein oder mehrere Optimierungskriterien optimalen Betriebs des Stromnetzes gelöst wird.

3. Verfahren nach einem der vorhergehenden Ansprüche, **dadurch gekennzeichnet, dass** ein Stromnetz (PG) in der Form eines Inselnetzes ohne Anbindung der Netzknoten (N1, N2, ..., N5) an weitere Stromnetze betrieben wird.

4. Verfahren nach einem der vorhergehenden Ansprüche, **dadurch gekennzeichnet, dass** das dynamische Modell des Stromnetzes (PG) auf der Annahme beruht, dass die in einem Netzknoten (N1, N2, ..., N5) erzeugte Wirkleistung und Blindleistung unmittelbar in jedem anderen Netzknoten (N1, N2, ..., N5) bereitstehen.

5. Verfahren nach einem der vorhergehenden Ansprüche, **dadurch gekennzeichnet, dass** das dynamische Modell des Stromnetzes (PG) ein linearisiertes Lastflussmodell verwendet.

6. Verfahren nach einem der vorhergehenden Ansprüche, **dadurch gekennzeichnet, dass** das Regelverfahren in dem netzbildenden Erzeugerknoten eine Proportionalregelung ist, die eine erste und eine zweite Proportionalregelung umfasst.

7. Verfahren nach Anspruch 6, **dadurch gekennzeichnet, dass**

- gemäß der ersten Proportionalregelung basierend auf einem ersten Proportionalitätsfaktor und einer dem netzbildenden Erzeugerknoten zugeordneten Referenzwirkleistung sowie einer dem Stromnetz (PG) zugeordneten Referenzfrequenz die Frequenz der Spannung in dem netzbildenden Erzeugerknoten in Abhängigkeit von der durch den netzbildenden Erzeugerknoten eingespeisten Wirkleistung festgelegt wird; oder
- gemäß der ersten Proportionalregelung basierend auf einem ersten Proportionalitätsfaktor und einem dem netzbildenden Erzeugerknoten zugeordneten Referenzwirkstrom sowie einer dem Stromnetz (PG) zugeordneten Referenzfrequenz die Frequenz der Spannung in dem netzbildenden Erzeugerknoten in Abhängigkeit von dem durch den netzbildenden Erzeugerknoten eingespeisten Wirkstrom festgelegt wird.

8. Verfahren nach Anspruch 6 oder 7, **dadurch gekennzeichnet, dass**

- gemäß der zweiten Proportionalregelung basierend auf einem zweiten Proportionalitätsfaktor und einer dem netzbildenden Erzeugerknoten zugeordneten Referenzblindleistung sowie einer dem netzbildenden Erzeugerknoten zugeordneten Referenzspannung die Amplitude der Spannung in dem netzbildenden Erzeugerknoten in Abhängigkeit von der durch den netzbildenden Erzeugerknoten eingespeisten Blindleistung festgelegt wird; oder
- gemäß der zweiten Proportionalregelung basierend auf einem zweiten Proportionalitätsfaktor und einem dem netzbildenden Erzeugerknoten zugeordneten Referenzblindstrom sowie einer dem netzbildenden Erzeugerknoten zugeordneten Referenzspannung die Amplitude der Spannung in dem netzbildenden Erzeugerknoten in Abhängigkeit von dem durch den netzbildenden Erzeugerknoten eingespeisten Blindstrom festgelegt wird.

9. Verfahren nach einem der vorhergehenden Ansprüche in Kombination mit Anspruch 2, **dadurch gekennzeichnet, dass** das Regelverfahren in dem netzstützenden Erzeugerknoten eine Proportionalregelung ist, die eine dritte und eine vierte Proportionalregelung umfasst.

10. Verfahren nach Anspruch 9, **dadurch gekennzeichnet, dass**

- gemäß der dritten Proportionalregelung basierend auf einem dritten Proportionalitätsfaktor und einer dem netzstützenden Erzeugerknoten zugeordneten Referenzwirkleistung sowie einer dem Stromnetz (PG) zugeordneten Referenzfrequenz die durch den netzstützenden Erzeugerknoten eingespeiste Wirkleistung in Abhängigkeit von der Frequenz der Spannung in dem netzstützenden Erzeugerknoten festgelegt wird; oder
- gemäß der dritten Proportionalregelung basierend auf einem dritten Proportionalitätsfaktor und einem dem netzstützenden Erzeugerknoten zugeordneten Referenzwirkstrom sowie einer dem Stromnetz (PG) zugeordneten Referenzfrequenz der durch den netzstützenden Erzeugerknoten eingespeiste Wirkstrom in Abhängigkeit von der Frequenz der Spannung in dem netzstützenden Erzeugerknoten festgelegt wird.

11. Verfahren nach Anspruch 9 oder 10, **dadurch gekennzeichnet, dass**

- gemäß der vierten Proportionalregelung basierend auf einem vierten Proportionalitätsfaktor und einer dem netzstützenden Erzeugerknoten zugeordneten Referenzblindleistung sowie einer dem netzstützenden Erzeugerknoten zugeordneten Referenzspannung die durch den netzstützenden Erzeugerknoten eingespeiste Blindleistung in Abhängigkeit von der Amplitude der Spannung in dem netzstützenden Erzeugerknoten festgelegt wird; oder

- gemäß der vierten Proportionalregelung basierend auf einem vierten Proportionalitätsfaktor und einem dem netzstützenden Erzeugerknoten zugeordneten Referenzblindstrom sowie einer dem netzstützenden Erzeugerknoten zugeordneten Referenzspannung der durch den netzstützenden Erzeugerknoten eingespeiste Blindstrom in Abhängigkeit von der Amplitude der Spannung in dem netzstützenden Erzeugerknoten festgelegt wird.

12. Verfahren nach einem der Ansprüche 6 bis 11, **dadurch gekennzeichnet, dass** im Rahmen der Einstellung der ersten und zweiten Proportionalregelung und/oder der dritten und vierten Proportionalregelung der erste und/oder der zweite Proportionalitätsfaktor und/oder der dritte und/oder der vierte Proportionalitätsfaktor und/oder die Referenzwirkleistung oder der Referenzwirkstrom und/oder die Referenzblindleistung oder der Referenzblindstrom in den jeweiligen ersten und/oder zweiten Netzknoten (N1, N2, N3, N4) bestimmt werden.

13. Verfahren nach einem der vorhergehenden Ansprüche, **dadurch gekennzeichnet, dass** das Optimierungsproblem eine Minimierung der durch den oder die ersten Netzknoten (N1) bereitgestellten Wirkleistung unter der Nebenbedingung ist, dass die Wirkleistungsveränderungen der ersten und/oder zweiten Netzknoten (N1, N2, N3, N4) für die jeweiligen vorgegebenen Wirkleistungsveränderungen der Last (L) begrenzt sind.

14. Verfahren nach einem der vorhergehenden Ansprüche, **dadurch gekennzeichnet, dass** das Optimierungsproblem eine Minimierung der Wirkleistungsveränderungen der ersten und/oder zweiten Netzknoten (N1, N2, N3, N4) für die jeweiligen vorgegebenen Wirkleistungsveränderungen der Last (L) ist.

15. Verfahren nach einem der vorhergehenden Ansprüche, **dadurch gekennzeichnet, dass** als Nebenbedingung des Optimierungsproblems berücksichtigt wird, dass die Abweichungen der Frequenzen der Spannungen in dem oder den netzbildenden und/oder netzstützenden Erzeugerknoten von einer dem Stromnetz (PG) zugeordneten Referenzfrequenz für die jeweiligen vorgegebenen Wirkleistungsveränderungen der Last (L) begrenzt sind und/oder die Abweichungen der Amplituden der Spannungen in dem oder den netzbildenden und/oder netzstützenden Erzeugerknoten von einer dem jeweiligen netzbildenden und/oder netzstützenden Erzeugerknoten zugeordneten Referenzspannung für jeweilige vorgegebene Blindleistungsveränderungen der Last (L) begrenzt sind.

16. Verfahren nach einem der vorhergehenden Ansprüche, **dadurch gekennzeichnet, dass** zur Ermittlung der Wirkleistungsveränderungen der zweiten Netzknoten (N2, N3, N4) eine zeitliche Veränderung der Frequenz in den jeweiligen zweiten Netzknoten (N2, N3, N4) über einen PLL-Algorithmus abgeschätzt wird.

17. Verfahren nach einem der vorhergehenden Ansprüche, **dadurch gekennzeichnet, dass** der oder die ersten Netzknoten (N1) einen oder mehrere Energiespeicher, insbesondere Batterien, und/oder einen oder mehrere über fossilen oder regenerativ erzeugten Brennstoff angetriebene elektrische Generatoren umfassen.

18. Verfahren nach einem der vorhergehenden Ansprüche in Kombination mit Anspruch 2, **dadurch gekennzeichnet, dass** der oder die zweiten Netzknoten (N2, N3, N4) eine oder mehrere Photovoltaikanlagen und/oder Windkraftanlagen umfassen.

19. Vorrichtung zur rechnergestützten Konfiguration eines elektrischen Stromnetzes (PG) mit einer Mehrzahl von über Stromleitungen (PL) verbundenen Netzknoten (N1, N2, ..., N5), umfassend einen oder mehrere erste Netzknoten (N1), wobei der oder die ersten Netzknoten (N1 im Betrieb des Stromnetzes (PG) Wirkleistung für eine Last (L) im Stromnetz (PG) bereitstellen, wobei ein jeweiliger erster Netzknoten (N1) ein netzbildender Erzeugerknoten ist, in dem mittels eines Regelverfahrens die Amplitude und Frequenz der Spannung in diesem Netzknoten (N1) einerseits in Abhängigkeit von der durch diesen Netzknoten (N1) eingespeisten Blindleistung oder dem durch diesen Netzknoten (N1) eingespeisten Blindstrom und andererseits in Abhängigkeit von der durch diesen Netzknoten (N1) eingespeisten Wirkleistung oder dem durch diesen Netzknoten (N1) eingespeisten Wirkstrom geregelt werden, dadurch gekennzeichet, dass
die Vorrichtung zur Durchführung eines Verfahrens eingerichtet ist, bei dem

- Wirkleistungsveränderungen der ersten Netzknoten (N1) für jeweilige vorgegebene Wirkleistungsveränderungen der Last (L) basierend auf einem dynamischen Modell des Stromnetzes (PG) ermittelt werden;
- Parameter der Regelverfahren der jeweiligen ersten Netzknoten (N1) derart eingestellt werden, dass mittels der ermittelten Wirkleistungsveränderungen der ersten Netzknoten (N1) ein Optimierungsproblem mit dem Ziel eines in Bezug auf ein oder mehrere Optimierungskriterien optimalen Betriebs des Stromnetzes gelöst wird, wobei es das Ziel des Optimierungsproblems ist, dass möglichst wenig der für die Last (L) bereitgestellten Wirkleistung von dem oder den ersten Netzknoten (N1) stammt.

20. Vorrichtung nach Anspruch 19, **dadurch gekennzeichnet, dass** die Vorrichtung zur Durchführung eines Verfahrens nach einem der Ansprüche 2 bis 19 eingerichtet ist.

21. Elektrisches Stromnetz mit einer Mehrzahl von über Stromleitungen (PL) verbundenen Netzknoten (N1, N2, ..., N5), umfassend einen oder mehrere erste Netzknoten (N1), wobei der oder die ersten Netzknoten (N1) im Betrieb des Stromnetzes (PG) Wirkleistung für eine Last (L) im Stromnetz (PG) bereitstellen, wobei ein jeweiliger erster Netzknoten (N1) ein netzbildender Erzeugerknoten ist, in dem mittels eines Regelverfahrens die Amplitude und Frequenz der Spannung in diesem Netzknoten (N1) einerseits in Abhängigkeit von der durch diesen Netzknoten (N1) eingespeisten Blindleistung oder dem durch diesen Netzknoten (N1) eingespeisten Blindstrom und andererseits in Abhängigkeit von der durch diesen Netzknoten (N1) eingespeisten Wirkleistung oder dem durch diesen Netzknoten (N1) eingespeisten Wirkstrom geregelt werden,
**dadurch gekennzeichnet, dass**
das Stromnetz (PG) eine Vorrichtung zur Konfiguration des Stromnetzes nach Anspruch 19 oder 20 umfasst.

**Claims**

1. Method for the computer-assisted configuration of an electrical power grid (PG) having a plurality of grid nodes (N1, N2, ..., N5), comprising one or more first grid nodes (N1), connected via power lines (PL), wherein the first grid node(s) (N1) provide(s) active power for a load (L) in the power grid (PG) during operation of the power grid (PG), wherein a respective first grid node (N1) is a grid-forming producer node in which the amplitude and frequency of the voltage in this grid node (N1) are controlled, on the one hand, on the basis of the reactive power fed in by this grid node (N1) or the reactive current fed in by this grid node (N1) and, on the other hand, on the basis of the active power fed in by this grid node (N1) or the active current fed in by this grid node (N1) using a control method,
**characterized in that**

   - changes in the active power of the first grid nodes (N1) are determined for respective predefined changes in the active power of the load (L) on the basis of a dynamic model of the power grid (PG);
   - parameters of the control methods for the respective first grid nodes (N1) are adjusted in such a manner that an optimization problem with the aim of operating the power grid in an optimum manner with respect to one or more optimization criteria is solved using the determined changes in the active power of the first grid nodes (N1), wherein the aim of the optimization problem is for as little of the active power provided for the load (L) as possible to come from the first grid node(s) (N1).

2. Method according to Claim 1, **characterized in that** the grid nodes (N1, N2, ..., N5) also comprise one or more second grid nodes (N2, N3, N4) which provide active power for the load in the power grid (PG) during operation of the power grid (PG), wherein a respective second grid node (N2, N3, N4) is a grid-supporting producer node in the form of a regenerative energy production plant (PV) in which, on the one hand, the active power fed in by this grid node (N2, N3, N4) or the active current fed in by this grid node (N2, N3, N4) and, on the other hand, the reactive power fed in by this grid node (N2, N3, N4) or the reactive current fed in by this grid node (N2, N3, N4) are controlled on the basis of the frequency and amplitude of the voltage in this grid node using a control method, wherein

   - changes in the active power of the second grid nodes (N2, N3, N4) are also determined for respective predefined changes in the active power of the load (L) on the basis of the dynamic model of the power grid (PG), and
   - the control methods for the respective first and second grid nodes (N1, N2, N3, N4) are adjusted in such a manner that the optimization problem with the aim of operating the power grid in an optimum manner with respect to one or more optimization criteria is solved using the determined changes in the active power of the first and second grid nodes (N1, N2, N3, N4).

3. Method according to one of the preceding claims, **characterized in that** a power grid (PG) is operated in the form of an island grid without the grid nodes (N1, N2, ..., N5) being connected to further power grids.

4. Method according to one of the preceding claims, **characterized in that** the dynamic model of the power grid (PG) is based on the assumption that the active power and reactive power produced in a grid node (N1, N2, ..., N5) are immediately available in every other grid node (N1, N2, ..., N5).

5. Method according to one of the preceding claims, **characterized in that** the dynamic model of the power grid (PG) uses a linearized load flow model.

6. Method according to one of the preceding claims, **characterized in that** the control method in the grid-forming producer node is proportional control which comprises first proportional control and second proportional control.

7. Method according to Claim 6, **characterized in that**

- according to the first proportional control based on a first proportionality factor and a reference active power assigned to the grid-forming producer node and a reference frequency assigned to the power grid (PG), the frequency of the voltage in the grid-forming producer node is stipulated on the basis of the active power fed in by the grid-forming producer node; or
- according to the first proportional control based on a first proportionality factor and a reference active current assigned to the grid-forming producer node and a reference frequency assigned to the power grid (PG), the frequency of the voltage in the grid-forming producer node is stipulated on the basis of the active current fed in by the grid-forming producer node.

8. Method according to Claim 6 or 7, **characterized in that**

- according to the second proportional control based on a second proportionality factor and a reference reactive power assigned to the grid-forming producer node and a reference voltage assigned to the grid-forming producer node, the amplitude of the voltage in the grid-forming producer node is stipulated on the basis of the reactive power fed in by the grid-forming producer node; or
- according to the second proportional control based on a second proportionality factor and a reference reactive current assigned to the grid-forming producer node and a reference voltage assigned to the grid-forming producer node, the amplitude of the voltage in the grid-forming producer node is stipulated on the basis of the reactive current fed in by the grid-forming producer node.

9. Method according to one of the preceding claims in combination with Claim 2, **characterized in that** the control method in the grid-supporting producer node is proportional control which comprises third proportional control and fourth proportional control.

10. Method according to Claim 9, **characterized in that**

- according to the third proportional control based on a third proportionality factor and a reference active power assigned to the grid-supporting producer node and a reference frequency assigned to the power grid (PG), the active power fed in by the grid-supporting producer node is stipulated on the basis of the frequency of the voltage in the grid-supporting producer node; or
- according to the third proportional control based on a third proportionality factor and a reference active current assigned to the grid-supporting producer node and a reference frequency assigned to the power grid (PG), the active current fed in by the grid-supporting producer node is stipulated on the basis of the frequency of the voltage in the grid-supporting producer node.

11. Method according to Claim 9 or 10, **characterized in that**

- according to the fourth proportional control based on a fourth proportionality factor and a reference reactive power assigned to the grid-supporting producer node and a reference voltage assigned to the grid-supporting producer node, the reactive power fed in by the grid-supporting producer node is stipulated on the basis of the amplitude of the voltage in the grid-supporting producer node; or
- according to the fourth proportional control based on a fourth proportionality factor and a reference reactive current assigned to the grid-supporting producer node and a reference voltage assigned to the grid-supporting producer node, the reactive current fed in by the grid-supporting producer node is stipulated on the basis of the amplitude of the voltage in the grid-supporting producer node.

12. Method according to one of Claims 6 to 11, **characterized in that**, within the scope of adjusting the first and second proportional control and/or the third and fourth proportional control, the first and/or the second proportionality factor and/or the third and/or the fourth proportionality factor and/or the reference active power or the reference active current and/or the reference reactive power or the reference reactive current in the respective first and/or second grid nodes (N1, N2, N3, N4) is/are determined.

13. Method according to one of the preceding claims, **characterized in that** the optimization problem is minimization of the active power provided by the first grid node(s) (N1) under the secondary condition that the changes in the active power of the first and/or second grid nodes (N1, N2, N3, N4) are limited for the respective predefined changes in the active power of the load (L).

14. Method according to one of the preceding claims, **characterized in that** the optimization problem is minimization of the changes in the active power of the first and/or second grid nodes (N1, N2, N3, N4) for the respective predefined changes in the active power of the load (L).

15. Method according to one of the preceding claims, **characterized in that** it is taken into account, as the secondary condition of the optimization problem, that the deviations of the frequencies of the voltages in the grid-forming and/or grid-supporting producer node(s) from a reference frequency assigned to the power grid (PG) are limited for the respective predefined changes in the active power of the load (L) and/or the deviations of the amplitudes of the voltages in the grid-forming and/or grid-supporting producer node(s) from a reference voltage assigned to the respective grid-forming and/or grid-supporting producer node are limited for respective predefined changes in the reactive power of the load (L).

16. Method according to one of the preceding claims, **characterized in that**, in order to determine the changes in the active power of the second grid nodes (N2, N3, N4), a temporal change in the frequency in the respective second grid nodes (N2, N3, N4) is estimated using a PLL algorithm.

17. Method according to one of the preceding claims, **characterized in that** the first grid node(s) (N1) comprise(s) one or more energy stores, in particular batteries, and/or one or more electrical generators driven using fossil fuel or regeneratively produced fuel.

18. Method according to one of the preceding claims in combination with Claim 2, **characterized in that** the second grid node(s) (N2, N3, N4) comprise(s) one or more photovoltaic plants and/or wind power plants.

19. Apparatus for the computer-assisted configuration of an electrical power grid (PG) having a plurality of grid nodes (N1, N2, ..., N5), comprising one or more first grid nodes (N1), connected via power lines (PL), wherein the first grid node(s) (N1) provide(s) active power for a load (L) in the power grid (PG) during operation of the power grid (PG), wherein a respective first grid node (N1) is a grid-forming producer node in which the amplitude and frequency of the voltage in this grid node (N1) are controlled, on the one hand, on the basis of the reactive power fed in by this grid node (N1) or the reactive current fed in by this grid node (N1) and, on the other hand, on the basis of the active power fed in by this grid node (N1) or the active current fed in by this grid node (N1) using a control method, **characterized in that** the apparatus is set up to carry out a method, in which

   - changes in the active power of the first grid nodes (N1) are determined for respective predefined changes in the active power of the load (L) on the basis of a dynamic model of the power grid (PG);
   - parameters of the control methods for the respective first grid nodes (N1) are adjusted in such a manner that an optimization problem with the aim of operating the power grid in an optimum manner with respect to one or more optimization criteria is solved using the determined changes in the active power of the first grid nodes (N1), wherein the aim of the optimization problem is for as little of the active power provided for the load (L) as possible to come from the first grid node(s) (N1).

20. Apparatus according to Claim 19, **characterized in that** the apparatus is set up to carry out a method according to one of Claims 2 to 19.

21. Electrical power grid having a plurality of grid nodes (N1, N2, ..., N5), comprising one or more first grid nodes (N1), connected via power lines (PL), wherein the first grid node(s) (N1) provide(s) active power for a load (L) in the power grid (PG) during operation of the power grid (PG), wherein a respective first grid node (N1) is a grid-forming producer node in which the amplitude and frequency of the voltage in this grid node (N1) are controlled, on the one hand, on the basis of the reactive power fed in by this grid node (N1) or the reactive current fed in by this grid node (N1) and, on the other hand, on the basis of the active power fed in by this grid node (N1) or the active current fed in by this grid node (N1) using a control method,

**EP 3 075 053 B1**

**characterized in that**
the power grid (PG) comprises an apparatus for configuring the power grid according to Claim 19 or 20.

**Revendications**

1. Procédé de configuration assistée par ordinateur d'un réseau de courant électrique (PG) comportant une pluralité de noeuds de réseau (N1, N2, ... , N5) reliés par des lignes électriques (PL), comprenant un ou plusieurs premiers noeuds de réseau (N1), le ou les premiers noeuds de réseau (N1) fournissant, pendant le fonctionnement du réseau de courant (PG), une puissance active pour une charge (L) dans le réseau de courant (PG), un premier noeud de réseau respectif (N1) étant un noeud producteur établisseur de réseau dans lequel sont réglées, au moyen d'un procédé de réglage, l'amplitude et la fréquence de la tension dans ce noeud de réseau (N1), d'une part, en fonction de la puissance réactive injectée par ce noeud de réseau (N1) ou du courant réactif injecté par ce noeud de réseau (N1) et, d'autre part, en fonction de la puissance active injectée par ce noeud de réseau (N1) ou du courant actif injecté par ce noeud de réseau (N1),
   **caractérisé en ce que**

   - des modifications de puissance active des premiers noeuds de réseau (N1) sont déterminées pour des modifications de puissance active respectives données de la charge (L) sur la base d'un modèle dynamique du réseau de courant (PG) ;
   - des paramètres des procédés de réglage des premiers noeuds de réseau respectifs (N1) sont réglés de telle sorte qu'est résolu, au moyen des modifications de puissance active déterminées des premiers noeuds de réseau (N1), un problème d'optimisation dans l'objectif d'un fonctionnement optimal du réseau de courant au regard d'un ou de plusieurs critères d'optimisation, l'objectif du problème d'optimisation étant qu'aussi peu de puissance active que possible fournie pour la charge (L) provienne du ou des premiers noeuds de réseau (N1).

2. Procédé selon la revendication 1, **caractérisé en ce que** les noeuds de réseau (N1, N2, ... , N5) comprennent en outre un ou plusieurs deuxièmes noeuds de réseau (N2, N3, N4) qui fournissent une puissance active pour la charge dans le réseau de courant (PG) pendant le fonctionnement du réseau de courant (PG), un deuxième noeud de réseau respectif (N2, N3, N4) étant un noeud producteur assistant de réseau en forme d'installation de production d'énergie régénérative (PV), dans lequel sont réglés, au moyen d'un procédé de réglage, d'une part, la puissance active injectée par ce noeud de réseau (N2, N3, N4) ou le courant actif injecté par ce noeud de réseau (N2, N3, N4) et, d'autre part, la puissance réactive injectée par ce noeud de réseau (N2, N3, N4) ou le courant réactif injecté par ce noeud de réseau (N2, N3, N4) en fonction de la fréquence et de l'amplitude de la tension dans ce noeud de réseau,

   - des modifications de puissance active des deuxièmes noeuds de réseau (N2, N3, N4) étant en outre déterminées pour des modifications de puissance active respectives données de la charge (L) sur la base du modèle dynamique du réseau de courant (PG) et
   - le procédé de réglage des premiers et deuxièmes noeuds de réseau respectifs (N1, N2, N3, N4) étant paramétré de telle sorte qu'est résolu, au moyen des modifications de puissance active déterminées des premiers et deuxièmes noeuds de réseau (N1, N2, N3, N4), le problème d'optimisation dans l'objectif d'un fonctionnement optimal du réseau de courant au regard d'un ou de plusieurs critères d'optimisation.

3. Procédé selon l'une des revendications précédentes, **caractérisé en ce qu'**est exploité un réseau de courant (PG) en forme de réseau en îlot sans raccordement des noeuds de réseau (N1, N2, ... , N5) à d'autres réseaux de courant.

4. Procédé selon l'une des revendications précédentes, **caractérisé en ce que** le modèle dynamique du réseau de courant (PG) repose sur l'hypothèse que la puissance active et la puissance réactive générées dans un noeud de réseau (N1, N2, ... , N5) sont immédiatement disponibles dans chaque autre noeud de réseau (N1, N2, ... , N5).

5. Procédé selon l'une des revendications précédentes, **caractérisé en ce que** le modèle dynamique du réseau de courant (PG) utilise un modèle de flux de charge linéarisé.

6. Procédé selon l'une des revendications précédentes, **caractérisé en ce que** le procédé de réglage dans le noeud producteur établisseur de réseau est un réglage proportionnel qui comprend un premier et un deuxième réglage proportionnel.

19

**7.** Procédé selon la revendication 6, **caractérisé en ce que**

- est déterminée, selon le premier réglage proportionnel basé sur un premier facteur de proportionnalité et une puissance active de référence associée au noeud producteur établisseur de réseau ainsi qu'une fréquence de référence associée au réseau de courant (PG), la fréquence de la tension dans le noeud producteur établisseur de réseau en fonction de la puissance active injectée par le noeud producteur établisseur de réseau ou
- est déterminée, selon le premier réglage proportionnel basé sur un premier facteur de proportionnalité et un courant actif de référence associé au noeud producteur établisseur de réseau ainsi qu'une fréquence de référence associée au réseau de courant (PG), la fréquence de la tension dans le noeud producteur établisseur de réseau en fonction du courant actif injecté par le noeud producteur établisseur de réseau.

**8.** Procédé selon la revendication 6 ou 7, **caractérisé en ce que**

- est déterminée, selon le deuxième réglage proportionnel basé sur un deuxième facteur de proportionnalité et une puissance réactive de référence associée au noeud producteur établisseur de réseau ainsi qu'une tension de référence associée au noeud producteur établisseur de réseau, l'amplitude de la tension dans le noeud producteur établisseur de réseau en fonction de la puissance réactive injectée par le noeud producteur établisseur de réseau ou
- est déterminée, selon le deuxième réglage proportionnel basé sur un deuxième facteur de proportionnalité et un courant réactif de référence associé au noeud producteur établisseur de réseau ainsi qu'une tension de référence associée au noeud producteur établisseur de réseau, l'amplitude de la tension dans le noeud producteur établisseur de réseau en fonction du courant réactif injecté par le noeud producteur établisseur de réseau.

**9.** Procédé selon l'une des revendications précédentes en combinaison avec la revendication 2, **caractérisé en ce que** le procédé de réglage dans le noeud producteur assistant de réseau est un réglage proportionnel qui comprend un troisième et un quatrième réglage proportionnel.

**10.** Procédé selon la revendication 9, **caractérisé en ce que**

- est déterminée, selon le troisième réglage proportionnel basé sur un troisième facteur de proportionnalité et une puissance active de référence associée au noeud producteur assistant de réseau ainsi qu'une fréquence de référence associée au réseau de courant (PG), la puissance active injectée par le noeud producteur assistant de réseau en fonction de la fréquence de la tension dans le noeud producteur assistant de réseau ou
- est déterminé, selon le troisième réglage proportionnel basé sur un troisième facteur de proportionnalité et un courant actif de référence associé au noeud producteur assistant de réseau ainsi qu'une fréquence de référence associée au réseau de courant (PG), le courant actif injecté par le noeud producteur assistant de réseau en fonction de la fréquence de la tension dans le noeud producteur assistant de réseau.

**11.** Procédé selon la revendication 9 ou 10, **caractérisé en ce que**

- est déterminée, selon le quatrième réglage proportionnel basé sur un quatrième facteur de proportionnalité et une puissance réactive de référence associée au noeud producteur assistant de réseau ainsi qu'une tension de référence associée au noeud producteur assistant de réseau, la puissance réactive injectée par le noeud producteur assistant de réseau en fonction de l'amplitude de la tension dans le noeud producteur assistant de réseau ou
- est déterminé, selon le quatrième réglage proportionnel basé sur un quatrième facteur de proportionnalité et un courant réactif de référence associé au noeud producteur assistant de réseau ainsi qu'une tension de référence associée au noeud producteur assistant de réseau, le courant réactif injecté par le noeud producteur assistant de réseau en fonction de l'amplitude de la tension dans le noeud producteur assistant de réseau.

**12.** Procédé selon l'une des revendications 6 à 11, **caractérisé en ce que** sont déterminés, dans le cadre du paramétrage du premier et du deuxième réglage proportionnel et/ou du troisième et du quatrième réglage proportionnel, le premier et/ou le deuxièmes facteur de proportionnalité et/ou le troisième et/ou le quatrième facteur de proportionnalité et/ou la puissance active de référence ou le courant actif de référence et/ou la puissance réactive de référence ou le courant réactif de référence dans les premiers et/ou deuxièmes noeuds de réseau respectifs (N1, N2, N3, N4).

**13.** Procédé selon l'une des revendications précédentes, **caractérisé en ce que** le problème d'optimisation est une minimisation de la puissance active fournie par le ou les premiers noeuds de réseau (N1) avec la condition secondaire que soient limitées les modifications de puissance active des premiers et/ou deuxièmes noeuds de réseau (N1, N2, N3, N4) pour les modifications de puissance active respectives données de la charge (L).

14. Procédé selon l'une des revendications précédentes, **caractérisé en ce que** le problème d'optimisation est une minimisation des modifications de puissance active des premiers et/ou deuxièmes noeuds de réseau (N1, N2, N3, N4) pour les modifications de puissance active respectives données de la charge (L).

15. Procédé selon l'une des revendications précédentes, **caractérisé en ce qu'**est pris en compte, en tant que condition secondaire, le fait que les écarts des fréquences des tensions dans le ou les noeuds producteurs établisseurs de réseau et/ou assistants de réseau sont limités par une fréquence de référence associée au réseau de courant (PG) pour les modifications de puissance active respectives données de la charge (L) et/ou les écarts des amplitudes des tensions dans le ou les noeuds producteurs établisseurs de réseau et/ou assistants de réseau sont limités par une tension de référence associée au noeud producteur établisseur de réseau et/ou assistant de réseau respectif pour des modifications de puissance réactive respectives données de la charge (L).

16. Procédé selon l'une des revendications précédentes, **caractérisé en ce qu'**une modification temporelle de la fréquence dans les deuxièmes noeuds de réseau (N2, N3, N4) respectifs est estimée par un algorithme PLL pour déterminer les modifications de puissance active des deuxièmes noeuds de réseau (N2, N3, N4).

17. Procédé selon l'une des revendications précédentes, **caractérisé en ce que** le ou les premiers noeuds de réseau (N1) comprennent un ou plusieurs accumulateurs d'énergie, et plus particulièrement des batteries, et/ou une ou plusieurs génératrices électriques entraînées à l'aide d'un combustible fossile ou produit de manière régénérative.

18. Procédé selon l'une des revendications précédentes en combinaison avec la revendication 2, **caractérisé en ce que** le ou les deuxièmes noeuds de réseau (N2, N3, N4) comprennent une ou plusieurs installations photovoltaïques et/ou éoliennes.

19. Dispositif pour la configuration assistée par ordinateur d'un réseau de courant électrique (PG) comportant une pluralité de noeuds de réseau (N1, N2, ... , N5) reliés par des lignes électriques (PL), comprenant un ou plusieurs premiers noeuds de réseau (N1), le ou les premiers noeuds de réseau (N1) fournissant, pendant le fonctionnement du réseau de courant (PG), une puissance active pour une charge (L) dans le réseau de courant (PG), un premier noeud de réseau respectif (N1) étant un noeud producteur établisseur de réseau dans lequel sont réglées, au moyen d'un procédé de réglage, l'amplitude et la fréquence de la tension dans ce noeud de réseau (N1), d'une part, en fonction de la puissance réactive injectée par ce noeud de réseau (N1) ou du courant réactif injecté par ce noeud de réseau (N1) et, d'autre part, en fonction de la puissance active injectée par ce noeud de réseau (N1) ou du courant actif injecté par ce noeud de réseau (N1),
**caractérisé en ce que**
le dispositif est aménagé pour réaliser un procédé dans lequel :

- des modifications de puissance active des premiers noeuds de réseau (N1) sont déterminées pour des modifications de puissance active respectives données de la charge (L) sur la base d'un modèle dynamique du réseau de courant (PG) ;
- des paramètres des procédés de réglage des premiers noeuds de réseau respectifs (N1) sont réglés de telle sorte qu'est résolu, au moyen des modifications de puissance active déterminées des premiers noeuds de réseau (N1), un problème d'optimisation dans l'objectif d'un fonctionnement optimal du réseau de courant au regard d'un ou de plusieurs critères d'optimisation, l'objectif du problème d'optimisation étant qu'aussi peu de puissance active que possible fournie pour la charge (L) provienne du ou des premiers noeuds de réseau (N1).

20. Dispositif selon la revendication 19, **caractérisé en ce que** le dispositif est aménagé pour exécuter un procédé selon l'une des revendications 2 à 19.

21. Réseau de courant électrique comportant une pluralité de noeuds de réseau (N1, N2, ... , N5) reliés par des lignes électriques (PL), comprenant un ou plusieurs premiers noeuds de réseau (N1), le ou les premiers noeuds de réseau (N1) fournissant, pendant le fonctionnement du réseau de courant (PG), une puissance active pour une charge (L) dans le réseau de courant (PG), un premier noeud de réseau respectif (N1) étant un noeud producteur établisseur de réseau dans lequel sont réglées, au moyen d'un procédé de réglage, l'amplitude et la fréquence de la tension dans ce noeud de réseau (N1), d'une part, en fonction de la puissance réactive injectée par ce noeud de réseau (N1) ou du courant réactif injecté par ce noeud de réseau (N1) et, d'autre part, en fonction de la puissance active injectée par ce noeud de réseau (N1) ou du courant actif injecté par ce noeud de réseau (N1),

**caractérisé en ce que**

le réseau de courant (PG) comprend un dispositif pour configurer le réseau de courant selon la revendication 19 ou 20.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012037989 A2

**In der Beschreibung aufgeführte Nicht-Patentliteratur**

- **LOPES et al.** PV Hybrid Mini-Grids: Applicable Control Methods for Various Situations. *International Energy Agency: Photovoltaic Power Systems Programme,* 2012

- **MARKUS JOSTOCK et al.** Structured Analysis of Arbitrary Island Grids. *IEEE PES Innovative Smart Grid Technologies Europe (ISGT Europe),* 06. Oktober 2013
- **SCHERER, C. ; WEILAND, S.** Linear Matrix Inequalities in Control. *lecture notes,* 2005, http://www.dc-sc.tudelft.nl/~cscherer/lmi/notes05.pdf